## Europäisches Patentamt

## European Patent Office

## Office européen des brevets

(11) Veröffentlichungsnummer: **0 200 994**
**B1**

(12)

# EUROPÄISCHE PATENTSCHRIFT

(45) Veröffentlichungstag der Patentschrift:
**18.01.89**

(51) Int. Cl.⁴: **G 21 C 19/32**

(21) Anmeldenummer: **86105593.7**

(22) Anmeldetag: **23.04.86**

(54) **Einrichtung zum Umladen von Brennelementen.**

(30) Priorität: **06.05.85 DE 3516241**

(43) Veröffentlichungstag der Anmeldung:
**12.11.86 Patentblatt 86/46**

(45) Bekanntmachung des Hinweises auf die Patenterteilung:
**18.01.89 Patentblatt 89/3**

(84) Benannte Vertragsstaaten:
**CH DE FR LI**

(56) Entgegenhaltungen:
**EP-A- 0 150 369**
**DE-A- 2 824 240**
**FR-A- 2 200 588**
**FR-A- 2 249 406**
**FR-A- 2 349 925**

(73) Patentinhaber: **Siemens Aktiengesellschaft Berlin und München, Wittelsbacherplatz 2, D-8000 München 2 (DE)**

(72) Erfinder: **Schuller, Horst, Dipl.-Ing. (FG), Peterswälder Strasse 3, D-6452 Hainburg (DE)**
Erfinder: **Schindler, Norbert, Dipl.-Ing. (TH), Sonnenberger Strasse 20, D-6204 Taunusstein (DE)**

## Beschreibung

Die Erfindung betrifft eine Einrichtung zum Umladen und Umsetzen von Brennelementen eines Kleinreaktors, die in Behältern in Lagerstrukturen angeordnet sind, durch ein Bedienungsgerät, das in einer horizontalen Ebene verschiebbar ist.

Eine Einrichtung zum Umladen von Brennelementen durch ein Bedienungsgerät ist bekannt (GB-PS 1 430 040). Hierbei ist auf Führungsschienen eine Brücke fahrbar angeordnet, die einen Reaktordruckbehälter überspannt. Auf der Brücke ist eine Laufkatze fahrbar angeordnet, die eine Hebeeinrichtung trägt. Durch Verfahren der Brücke und der Laufkatze wird die Hebeeinrichtung zu einem beliebigen Punkt in einer horizontalen Ebene oberhalb des Reaktors bewegt und dann das gewünschte Brennelement aus seiner Lagerstruktur herausgehoben. Oberhalb der Lagerstrukturen für die Brennelemente befindet sich ein Flutraum, damit die Brennelemente stets unter Wasser bewegt werden.

Eine derartige fest installierte Einrichtung zum Umladen von Brennelementen, die einen ständig mit Wasser gefüllten Flutraum aufweist, erfordert ein grosses Bauvolumen und dadurch einen hohen Materialaufwand sowie lange Fertigungszeiten. Ein solcher Aufwand ist insbesondere beim Bau von Kleinreaktoren unwirtschaftlich, die beispielsweise als Heizreaktoren eingesetzt werden.

Ein solcher Kleinreaktor muss wegen seiner speziellen Konstruktion nur selten und dann nur für eine kurze Zeitspanne zugänglich sein. Daher ist es unwirtschaftlich, wenn Bedienungsgeräte im Reaktorgebäude montiert sind, was ein entsprechend grosses Reaktorgebäude erforderte. Das Reaktorgebäude eines Kleinreaktors umschliesst deshalb nur den Reaktor und weist in der Gebäudedecke eine verschliessbare Öffnung auf, durch die von aussen Bedienungsgeräte zum Reaktor vordringen können.

Der Erfindung liegt die Aufgabe zugrunde, eine kostengünstige und einfache Einrichtung zum Umladen von Brennelementen zu entwickeln, die für einen Einsatz am Reaktorgebäude eines derartigen Kleinreaktors ausgelegt ist.

Die Aufgabe wird erfindungsgemäss dadurch gelöst, dass auf die geöffneten Behälter ein mobiles Wasser aufnehmendes Flutbecken montierbar ist und dass auf die Lagerstrukturen für Brennelemente umsetzbare Zwischenführungsstücke zentrierbar sind und über diesen oder über den Lagerstrukturen ein Transportrohr für Brennelemente zentrierbar ist, das mit dem Bedienungsgerät verbunden ist und in dem ein Greifer geführt wird.

Demontierbare Wannen zum Brennelement-Wechsel wurden bereits vorgeschlagen in der älteren EP-A-150 369.

Die Brennelemente des Kleinreaktors müssen nur selten umgeladen werden. Dann ist jedoch ein Flutbecken erforderlich, dass ein Anheben des Wasserstandes ermöglicht, so dass die Brennelemente dann stets unter Wasser bewegt werden. Das Flutbecken eines Kleinreaktors wird aber so selten benötigt, dass man mit einem mobilen Flutbecken auskommt, das bei Bedarf auf den geöffneten Behälter montiert wird. Darüber hinaus kann auf eine Schutzumbauung des Flutbeckens verzichtet werden, da es nur für kurze Zeit eingesetzt wird.

Hiermit wird der Vorteil erzielt, dass man mit einem kleineren Bauvolumen, kürzerer Bauzeit und damit niedrigeren Kosten auskommt, als bei einem fest installierten und von einem Schutzgebäude umgebenen Flutbecken.

Damit das Bedienungsgerät durch das Flutbecken sicher zu den Lagerstrukturen für Brennelemente geführt wird, sind Zwischenführungsstücke vorgesehen, die auf die Lagerstrukturen aufgesetzt werden. Es wird so ein durchgehendes Führungsrohr für die Brennelemente gebildet. Dadurch kommt man ohne aufwendige teleskopierbare Vorrichtungen am Bedienungsgerät aus. Um Material zu sparen, sind nur für einen Teil der Lagerstrukturen Zwischenführungsstücke vorhanden. Diese werden, nachdem die mit ihnen verbundenen Lagerstrukturen entleert bzw. gefüllt sind, auf andere Lagerstrukturen umgesetzt. Darüber hinaus sind die entleerten Lagerstrukturen für Brennelemente selbst beispielsweise in einen zweiten Behälter umsetzbar.

Die erfindungsgemässe Einrichtung zum Umladen von Brennelementen wird nur selten kurzzeitig eingesetzt. Mit der Erfindung wird der Vorteil erzielt, dass nur wenige Bauteile und Geräte für den Aufbau der Einrichtung notwendig sind, die ohnehin nur selten benötigt werden und sonst gelagert und gewartet werden müssen.

Das Bedienungsgerät der Einrichtung ist mit einem Transportrohr für Brennelemente verbunden, das über den Zwischenführungsstücken zentrierbar ist, so dass Lagerstruktur und Bedienungsgerät durch ein Rohr verbunden sind. Durch dieses Rohr wird ein Greifer des Bedienungsgerätes geführt, der ein Brennelement aus seiner Lagerstruktur herauszieht und im Transportrohr hält. Danach wird das Transportrohr vom Zwischenführungsstück gelöst, durch das Bedienungsgerät bewegt und über einem anderen Zwischenführungsstück oder auch direkt über einer Lagerstruktur zentriert. Das Brennelement wird anschliessend durch den Greifer in seine neue Position abgesenkt. Hiermit wird vorteilhaft ein sicherer Transport der Brennelemente gewährleistet.

Nach einem ersten Beispiel wird die erfindungsgemässe Einrichtung zum Umsetzen von Brennelementen innerhalb des Reaktordruckbehälters eingesetzt: Dazu ist das in einer horizontalen Ebene verschiebbare Bedienungsgerät zusätzlich mit einer Dreheinrichtung ausgestattet. Diese Dreheinrichtung gestattet es, das Transportrohr in 90° Schritten zu drehen. Hiermit erzielt man den Vorteil, dass auch unsymmetrische Brennelemente, die an einer Ecke abgeschrägt sind, selbst bei vorgegebener unterschiedlicher Orientierung in den Lagerstrukturen umzusetzen sind.

Nach einem zweiten Beispiel soll die erfindungsgemässe Einrichtung zum Notentladen von Brennelementen aus dem Reaktordruckbehälter in ein Zwischenlagerbecken eingesetzt werden: Dazu ist vorgesehen, dass in einem neben dem Reaktordruckbehälter angeordneten Abblasetank ein mobiles Zwischenlagerbecken einsetzbar ist und Reaktordruckbehälter und Zwischenlagerbecken durch das mobile Flutbecken miteinander zu verbinden sind.

Mit dieser Einrichtung wird der Vorteil erzielt, dass die Brennelemente unter Wasser vom Reaktordruckbehälter zum Zwischenlagerbecken transportierbar sind. Das Zwischenlagerbecken ist mit eigenen Zwischenführungsstücken ausgestattet, durch die die Brennelemente vom Transportrohr des Bedienungsgerätes in Lagerstrukturen des Zwischenlagerbeckens abgesenkt werden. Das Zurückladen erfolgt entsprechend in umgekehrter Reihenfolge. Ausserdem sind leere Lagerstrukturen für Brennelemente zwischen Reaktordruckbehälter und Zwischenlagerbecken austauschbar, so dass die notwendige Anzahl von Lagerstrukturen vorteilhaft begrenzt werden kann.

Nach einem dritten Beispiel wird die erfindungsgemässe Einrichtung zum Entladen von Brennelementen aus dem Reaktordruckbehälter in einem Transportbehälter eingesetzt: Dazu ist in den neben dem Reaktordruckbehälter angeordneten Abblasetank statt eines mobilen Zwischenlagerbeckens ein Transportbehälter einsetzbar. Da ein solcher Transportbehälter kleiner ist als ein Zwischenlagerbecken, ist im Abblasetank ein Schemel angeordnet, der den Transportbehälter aufnimmt. Durch den Einsatz dieses Schemels wird der Abblasetank auf einfache Weise umgerüstet, so dass er wahlweise ein Zwischenlagerbecken oder einen Transportbehälter aufnimmt. Der Schemel ist nicht fest montiert und kann aus dem Abblasetank leicht herausgehoben und wieder eingesetzt werden. Der Materialaufwand wird also weiter eingeschränkt.

Um den Abtransport des gefüllten Transportbehälters durch einen Kran zu erleichtern, ist das Flutbecken ganz oder nur teilweise demontierbar. Nachdem das Flutbecken entleert worden ist, reicht es demnach aus, nur einige Teile des Flutbeckens zu entfernen, was den Arbeitsaufwand vorteilhaft vermindert.

Weiterhin kann die Hebeeinrichtung leicht demontierbar konstruiert sein. Sie wird dann nur bei Bedarf aufgestellt. Damit erzielt man den Vorteil, dass die Hebeeinrichtung in den relativ langen Zeiträumen zwischen zwei Einsätzen gewartet oder sogar an einem anderen Reaktor eingesetzt werden kann.

Die Hebeeinrichtung kann beispielsweise direkt auf der Gebäudedecke eines Kleinreaktors aufgestellt und von ihr getragen sein. Durch die gewählten Stützen wird die Hebeeinrichtung oberhalb der verschliessbaren Öffnung in der Gebäudedecke gehalten. Eine derartige Hebeeinrichtung kann leicht montiert und transportiert werden, insbesondere falls ihre Stützen entfernt werden können. Der Greifer der Hebeeinrichtung kann ein Pneumatikgreifer sein, der zuverlässig arbeitet.

Beispielsweise kann das mobile Flutbecken zur leichteren Dekontaminierung mit einer geeigneten Folie ausgekleidet sein. Darüber hinaus ist zur Abschirmung eine Umbauung des Flutbeckens mit Betonriegeln möglich. Solche Betonriegel erfüllen ihre Aufgabe bereits dann, falls sie nur lose aufgeschichtet sind. Sie können demnach mit relativ kleinem Aufwand aufgebaut und auch wieder entfernt werden.

Mit der Erfindung wird insbesondere der Vorteil erzielt, dass die Einrichtung zum Umladen von Brennelementen mit geringem Aufwand erstellt und eingesetzt werden kann. Sie ist dadurch für den Einsatz an einem Kleinreaktor, wie beispielsweise einem Heizreaktor geeignet, dessen Gesamtkosten möglichst niedrig sein sollen.

Die Erfindung soll anhand eines in der Zeichnungen wiedergegebenen Ausführungsbeispieles erläutert werden:

Fig. 1 zeigt einen senkrechten Schnitt durch ein Reaktorgebäude eines Kleinreaktors, das zum Notentladen von Brennelementen mit der erfindungsgemässen Einrichtung ausgerüstet ist.

Fig. 2 zeigt einen Transportbehälter für Brennelemente auf einem Schemel in dem in Fig. 1 gezeigten Abblasetank.

Ein Reaktorgebäude 1 für einen Kleinreaktor ist in einem Schacht angeordnet und niveaugleich mit der Erdoberfläche 2 durch eine Gebäudedecke 3 abgeschlossen. Ein solcher Kleinreaktor muss nur selten und dann nur für kurze Zeit zugänglich sein. Die Gebäudedecke 3 weist dafür Öffnungen 4 auf, die im Betriebszustand durch nicht dargestellte Abdeckplatten verschlossen sind. Bei geöffnetem Reaktorgebäude 1 kann ein Bedienungsgerät 5, das oberhalb des Reaktorgebäudes 1 in einer horizontalen Ebene verschiebbar ist, zum Kleinreaktor vordringen.

Die Brennelemente des Kleinreaktors sind in einem Reaktordruckbehälter 6 in Lagerstrukturen 7 angeordnet. Beim Notentladen sollen die Brennelemente aus dem Reaktordruckbehälter 6 in ein mobiles Zwischenlagerbecken 8 umgesetzt werden, das sich in einem Abblasetank 9 befindet. Damit die Brennelemente stets unter Wasser bewegt werden, ist auf den Behältern 6 und 8 ein gemeinsames mobiles Flutbecken 10 angeordnet, das mit Wasser gefüllt ist.

Auf die Lagerstrukturen 7 für Brennelemente sind umsetzbare Zwischenführungsstücke 11 zentriert aufgesetzt. Über einem dieser Zwischenführungsstücke 11 wird dann ein Transportrohr 12 für Brennelemente zentriert, das Bestandteil des Bedienungsgerätes 5 ist. Dadurch wird ein durchgehendes Führungsrohr für die Brennelemente gebildet, durch das vom Bedienungsgerät 5 aus ein Greifer 13 bis zum Brennelement geführt wird. Durch das Bedienungsgerät 5 wird dann ein Brennelement in das Transportrohr 12 hinaufgezogen, dort arretiert und dann an seinen Bestimmungsort beispielsweise zum Zwischenlagerbecken 8 gebracht. Dort wird das Brennelement durch ein Zwischenführungsstück 17 in eine Lagerstruktur 18 abgesenkt.

Die Zwischenführungsstücke 11 können nach Bedarf auf andere Lagerstrukturen 7 umgesetzt werden, so dass erheblich weniger Zwischenführungsstücke 11 als Lagerstrukturen 7 vorhanden sein müssen. Ebenso können die Zwischenführungsstücke 17 im Zwischenlagerbecken 8 auf andere Lagerstrukturen 18 umgesetzt werden. Auch die Lagerstrukturen 7 und 18 selbst können, nachdem sie entleert wurden, umgesetzt werden, beispielsweise vom Reaktordruckbehälter 6 in das Zwischenlagerbecken 8.

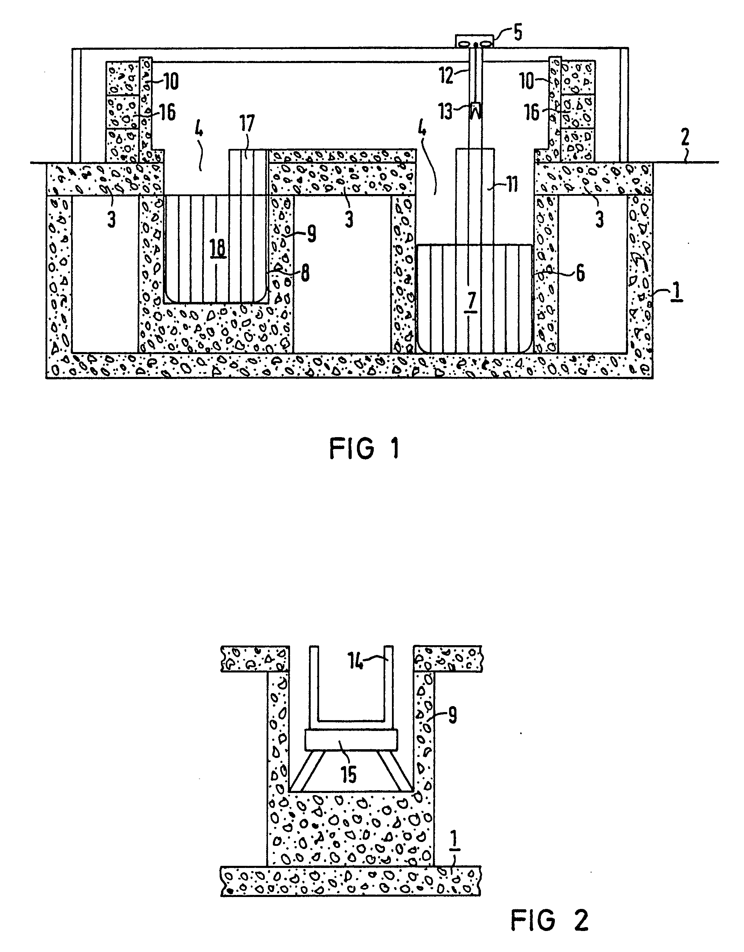

Falls verbrauchte Brennelemente aus dem Reaktordruckbehälter 6 in einen Transportbehälter 14 nach Fig. 2 zu entladen sind, wird im Abblasetank 9 ein Schemel 15 angeordnet, der den Transportbehälter 14 aufnimmt. Dadurch befindet sich der im Verhältnis zum Abblasetank 9 relativ kleine Transportbehälter 14 in einer für das Bedienungsgerät 5 geeigneten Position. Wenn der Transportbehälter 14 voll ist, wird das Flutbecken 10 entleert und teilweise demontiert. Dann wird der Transportbehälter 14 durch einen nicht dargestellten Kran aus dem Abblasetank 9 herausgehoben und dann abtransportiert.

Das Bedienungsgerät 5 weist eine Dreheinrichtung auf, durch die das Transportrohr 12 in 90° Schritten drehbar ist. Dadurch können Brennelemente mit unsymmetrischem Querschnitt beim Umsetzen im Reaktordruckbehälter 6 bei Bedarf gedreht werden.

Das Flutbecken 10 ist zur Abschirmung mit aufeinander geschichteten Betonriegeln 16 umbaut. Darüber hinaus kann das Flutbecken 10 zur Dekontaminierung auch mit einer Folie ausgekleidet sein.

Da die erfindungsgemässe Einrichtung zum Umladen von Brennelementen eines Kleinreaktors nur selten für kurze Zeit eingesetzt wird, sind das Flutbecken 10 und auch das Bedienungsgerät 5 leicht demontierbar aufgestellt.

*Liste der Bezugszeichen*

1 Reaktorgebäude
2 Erdoberfläche
3 Gebäudedecke
4 Öffnungen in der Gebäudedecke
5 Bedienungsgerät
6 Reaktordruckbehälter
7 Lagerstrukturen im Reaktordruckbehälter
8 Zwischenlagerbecken
9 Abblasetank
10 Flutbecken
11 Zwischenführungsstücke für den Reaktordruckbehälter
12 Transportrohr
13 Greifer
14 Transportbehälter
15 Schemel
16 Betonriegel
17 Zwischenführungsstücke für das Zwischenlagerbecken
18 Lagerstrukturen im Zwischenlagerbecken.

**Patentansprüche**

1. Einrichtung zum Umladen und Umsetzen von Brennelementen eines Kleinreaktors, die in Behältern in Lagerstrukturen (7, 18) angeordnet sind, durch ein Bedienungsgerät (5), das in einer horizontalen Ebene verschiebbar ist, dadurch gekennzeichnet, dass auf die geöffneten Behälter ein mobiles, Wasser aufnehmendes Flutbeckens (10) montierbar ist und dass auf die Lagerstrukturen (7, 18) für Brennelemente umsetzbare Zwischenführungsstücke (11, 17) zentrierbar sind und über diesen oder über den Lagerstrukturen (7, 18) ein Transportrohr (12) für Brennelemente zentrierbar ist, das mit dem Bedienungsgerät (5) verbunden ist und in dem ein Greifer (13) geführt wird.

2. Einrichtung nach Anspruch 1 zum Umsetzen von Brennelementen innerhalb eines Reaktordruckbehälters (6), dadurch gekennzeichnet, dass das Bedienungsgerät (5) eine Dreheinrichtung für das Transportrohr (12) aufweist, wodurch das Transportrohr (12) in 90° Schritten drehbar ist.

3. Einrichtung nach Anspruch 1 zum Notentladen von Brennelementen aus einem Reaktordruckbehälter (6) in ein Zwischenlagerbecken (8), dadurch gekennzeichnet, dass in einem neben dem Reaktordruckbehälter (6) angeordneten Abblasetank (9) ein mobiles Zwischenlagerbecken (8) einsetzbar ist und dass der Reaktordruckbehälter (6) und das Zwischenlagerbecken (8) durch das mobile Flutbecken (10) miteinander zu verbinden sind, so dass die Brennelemente unter Wasser vom Reaktordruckbehälter (6) zum Zwischenlagerbecken (8) transportierbar und leere Lagerstrukturen (7, 18) für Brennelemente zwischen dem Reaktordruckbehälter (6) und dem Zwischenlagerbecken (8) umsetzbar sind.

4. Einrichtung nach den Ansprüchen 1 und 3 zum Entladen von Brennelementen aus dem Reaktordruckbehälter (6) in einen Transportbehälter (14), dadurch gekennzeichnet, dass im Abblasetank (9) ein Schemel (15) angeordnet ist, der den Transportbehälter (14) aufnimmt und dass zum Abtransport des Transportbehälters (14) durch einen Kran das Flutbecken (10) zu entleeren und teilweise demontierbar ist.

5. Einrichtung nach Anspruch 1, dadurch gekennzeichnet, dass das Bedienungsgerät (5) auf einer Gebäudedecke (3) eines Reaktorgebäudes (1) leicht demontierbar angeordnet ist und durch eine verschliessbare Öffnung (4) in der Gebäudedecke (3) mit den Brennelementen in Verbindung steht.

6. Einrichtung nach Anspruch 1, dadurch gekennzeichnet, dass der Greifer (13) des Bedienungsgerätes (5) ein Pneumatikgreifer ist.

7. Einrichtung nach Anspruch 1, dadurch gekennzeichnet, dass das Flutbecken (10) mit Folie ausgekleidet ist.

8. Einrichtung nach Anspruch 1, dadurch gekennzeichnet, dass das Flutbecken (10) mit stapelbaren Betonriegeln (16) zur Abschirmung umbaubar ist.

**Claims**

1. Device for the reloading and transferring of fuel elements of a small reactor, arranged in vessels in storage structures (7, 18), by means of an operating unit (5) which is movable on a horizontal plane, characterized in that a mobile flood basin (10) holding water can be mounted on the opened vessels and that transferable intermediary guide members (11, 17) can be centred on the storage structures (7, 18) for fuel elements, and a transport pipe (12) for fuel elements can be centred above the intermediary guide members or above the storage structures (7, 18), the transport pipe being connected with the operating unit (5), and having a gripper (13) led into it.

2. Device according to claim 1 for the transferring of fuel elements within a reactor pressure vessel (6), characterized in that the operating unit (5) has a turning device for the transport pipe (12), whereby the transport pipe (12) can be turned in angles of 90°.

3. Device according to claim 1 for the emergency unloading of fuel elements from a reactor pressure vessel (6) into an intermediary storage basin (8), characteized in that a mobile intermediary storage basin (8) is able to be inserted into a blow-off tank (9) arranged next to the reactor pressure vessel (6), and that the reactor pressure vessel (6) and the intermediary storage basin (8) are to be connected with each other by means of the mobile flood basin (10), so that the fuel elements can be transported in water from the reactor pressure vessel (6) to the intermediary storage basin (8) and empty storage structure (7, 18) for fuel elements can be transferred between the reactor pressure vessel (6) and the intermediary storage basin (8).

4. Device according to claim 1 and 3 for the unloading of fuel elements from the reactor pressure vessel (6) into a transport vessel (14), characterized in that a stool (15) is arranged in the blow-off tank (9), lifting up the transport vessel (14), and that in order to transport the transport vessel (14) away by means of a crane, the flood basin (10) is to be emptied and can be partially dismantled.

5. Device according to claim 1, characterized in that the operating unit (5) is arranged on a structural roof (3) of a reactor structure (1) so that it can be easily dismantled and is connected with the fuel elements through an opening (4), which can be closed, in the structural roof (3).

6. Device according to claim 1, characterized in that the gripper (13) of the operating unit (5) is a pneumatic gripper.

7. Device according to claim 1, characterized in that the flood basin (10) is lined with foil.

8. Device according to claim 1, characterized in that the flood basin (10) can be modified with stackable concrete blocks (16) in order to shield it.

**Revendications**

1. Dispositif de rechargement et de permutation d'assemblages combustibles d'un réacteur de petite dimension, qui sont disposés dans des cuves dans des structures de stockage (7, 18), sous l'effet d'un appareil de manoeuvre (5) qui peut se déplacer dans un plan horizontal, caractérisé en ce que sur la cuve ouverte peut être montée une piscine (10) mobile recevant de l'eau et sur les structures de stockage (7, 18) des assemblages combustibles peuvent être centrées des pièces de guidage intermédiaires (11, 17) pouvant changer de position et au-dessus de celles-ci ou au-dessus des structures de stockage (7, 18) peut être centré un tube de transport (12) des assemblages combustibles, qui est relié à l'appareil de manoeuvre (5) et dans lequel passe un grappin (13).

2. Dispositif suivant la revendication 1, pour permuter des assemblages combustibles à l'intérieur d'une cuve sous pression de réacteur (6), caractérisé en ce que l'appareil de manoeuvre (5) comporte un dispositif de rotation du tube de transport (12) de sorte que celui-ci peut tourner suivant des pas de 90°.

3. Dispositif suivant la revendication 1, pour le déchargement d'urgence d'assemblages combustibles d'une cuve de réacteur sous pression (6) dans un bassin de stockage intermédiaire (8), caractérisé en ce que dans une cuve d'évacuation (9) disposée à côté de la cuve de réacteur sous pression (6) peut être monté un bassin de stockage intermédiaire (8) mobile et la cuve de réacteur sous pression (6) et le bassin de stockage intermédiaire (8) peuvent communiquer entre eux par la piscine mobile (10) de manière à pouvoir transporter les assemblages combustibles sous l'eau de la cuve de réacteur sous pression (6) au bassin de stockage intermédiaire (8) et à pouvoir permuter des structures de stockage (7, 18) d'assemblages combustibles qui sont vides entre la cuve de réacteur sous pression (6) et le bassin de stockage intermédiaire (8).

4. Dispositif suivant les revendications 1 et 3 pour décharger des assemblages combustibles de la cuve de réacteur sous pression (6) dans un récipient de transport (14), caractérisé en ce que dans la cuve d'évacuation (9) est disposé un tabouret (15) qui recoit le récipient de transport (14) et pour enléver le récipient de transport (14) par une grue, la piscine (10) peut être vidée et peut être démontée partiellement.

5. Dispositif suivant la revendication 1, caractérisé en ce que l'appareil de manoeuvre (5) est disposé de manière facilement démontable sur un plafond (3) du bâtiment de réacteur (1) et communique avec les assemblages combustibles par une baie (4) qui est ménagée dans le plafond du bâtiment (3) et qui peut être fermée.

6. Dispositif suivant la revendication 1, caractérisé en ce que le grappin (13) de l'appareil de manoeuvre est un grappin pneumatique.

7. Dispositif suivant la revendication 1, caractérisé en ce que la piscine (10) est revêtue d'une feuille.

8. Dispositif suivant la revendication 1, caractérisé en ce que la piscine (10) peut être entourée pour le blindage de poutres en béton (16), qui peuvent être empilées.

FIG 1

FIG 2